# EUROPEAN PATENT SPECIFICATION

(11) **EP 0 542 567 B1**
(45) Date of publication and mention of the grant of the patent: **31.01.1996**
(21) Application number: 92310388.1
(22) Date of filing: 13.11.1992
(51) Int. Cl.: B60C 9/20, B60C 9/22, B60C 9/00

(54) **Pneumatic tyre**
Luftreifen
Bandage pneumatique

(30) Priority: 15.11.1991 JP 328190/91
(43) Date of publication of application: 19.05.1993
(73) Proprietor: SUMITOMO RUBBER INDUSTRIES LIMITED, Kobe-shi Hyogo-ken (JP)
(72) Inventor: Iwamura, Wako, Kobe-shi, Hyogo-ken (JP)
(74) Representative: Stewart, Charles Geoffrey

(56) References cited:
- EP-A- 0 360 588
- GB-A- 2 003 525
- US-A- 3 857 229
- US-A- 4 832 101

## Description

The present invention relates to a pneumatic tyre having an improved belt structure, in which high speed durability is improved and tyre weight reduction is achieved.

In belted radial tyres for high performance cars such as sport cars, a steel belt composed of two plies of moulded steel cords at an angle of 15 to 30 degrees with respect to the tyre equator are hitherto widely employed.

Such a steel belt, however, when constructed to withstand high speed running such as for example over 200 km/h, greatly increases the tyre weight and lowers the fuel consumption performance.

In order to reduce tyre weight the present inventor experimentally made and tested radial tyres with lightweight material cords wherein the belt is formed by spirally winding a high modulus aromatic polyamide fibre cord on the carcass.

As a result, the inventor found that when such a high modulus single material cord was used in a wound belt structure, the tread rigidity was excessively increased and steering stability and ride comfort were lost.

Further, during the tyre vulcanising process when the inside of the tyre is pressurised by an inflated diaphragm, belt elongation was insufficient for the tyre to be fully pressed against the mould, and as a result, sometimes the moulding was incomplete, and undesirable stress and/or strain resided in the belt, tread rubber and so on.

A tyre having a belt comprising a composite cord comprising a high modulus strand and a low modulus strand twisted together according to the preamble of claim 1 is known, for example from GB-A-2003525.

It is therefore, an object of the present invention to provide a pneumatic tyre, in which the high speed durability is improved and at the same time tyre weight reduction is achieved without deteriorating the steering stability and ride comfort.

According to one aspect of the present invention, A pneumatic tyre comprises a tread portion having a pair of tread edges, a pair of axially spaced bead regions, a pair of sidewalls extending between the tread edges and the bead regions, a bead core disposed in each of the bead portions, a carcass extending between the bead regions and turned up around the bead cores, a rubber tread disposed radially outside the crown portion of the carcass defining the tread portion, and a belt made of at least one belt cord disposed between the carcass and the rubber tread, wherein said belt cord comprises a high modulus strand and a low modulus strand twisted together, said high modulus strand being made of two or more continuous organic material filament having a high elastic modulus, said low modulus strand being made of two or more continuous organic material filaments having a low elastic modulus, characterised in that the at least one belt cord is wound spirally so that the windings of the belt cord are laid at a substantially zero angle with respect to the tyre equator and in a unit length of said belt cord, the length of the high modulus filament being in the range of 104 to 124 % of the length of the low modulus filament, each measured along the respective filament in an unloaded state, the strand-twist number of the low modulus strand being equal to that of the high modulus strand, and the cable twist number of the low modulus strand being differed from that of the high modulus strand, the quotient T/A (mm/degree) of the rubber thickness T (mm) of the rubber tread measured from the tread surface to the outer surface of the radially outermost belt divided by the hardness A (degree) of the tread rubber being not more than 0.19 mm/degree Shore A (0.2mm/degree JIS A), and each bead region being provided with a rubber bead apex having a hardness of not more than 99 degrees Shore A (96 degrees JIS A), said bead apex extending radially outwardly from the bead core so as to have a radially outer edge positioned at a height of not more than 0.4 times the tyre section height, each measured from the bead base line.

An embodiment of the present invention will now be described in detail in conjunction with the accompanying drawings, in which:

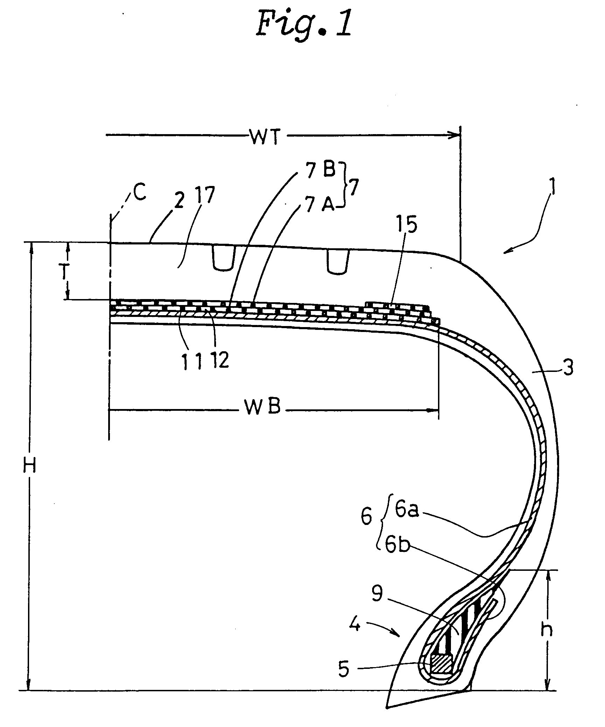

Fig.1 is a cross sectional view of a passenger car tyre according to the present invention;
Fig.2 is a perspective view of a reinforcing strip used to form the belt;
Fig.3 is a perspective view of the belt cord; and
Fig.4 is a diagram explaining the length difference between the high modulus filament and the low modulus filament.

In the figures, pneumatic tyre 1 has a tread portion 2, a pair of axially spaced bead regions 4, and a pair of sidewalls 3 extending between the tread edges and the bead regions.

The tyre 1 comprises a pair of bead cores 5 disposed one in each of the bead regions 4, a carcass 6 extending between the bead portions 4, and tread reinforcing belts 7 disposed radially outside the carcass 6 and inside a rubber tread 17.

The carcass 6 comprises at least one ply, in this example one ply, of reinforcement cords arranged radially at an angle of 85 to 90 degrees with respect to the tyre equator C.

The carcass ply extends between the bead regions 4 through the sidewalls 3 and the tread portion 2 and is turned up around the bead cores 5 from the axially inside to the outside thereof to form two turned up portions 6b and one main portion 6a therebetween.

For the carcass cords, organic fibre cords, e.g. nylon, rayon, polyester or the like are used.

Each of the bead regions 4 is provided between the carcass main portion 6a and its respective turned up portion 6b with a rubber bead apex 9 extending radially outwardly from the bead core 5.

The belts 7 comprise a radially inner wide belt 7B disposed on the carcass, a radially outer wide belt 7A disposed on the inner belt 7B, and a pair of axially spaced narrow edge band belts 15 one disposed on each edge part of the radially outermost wide belt 7A.

Each belt 7A, 7B, 15 is made of belt cords 11 wound spirally so that the windings of the belt cords 11 are laid at a substantially zero angle with respect to the tyre equator C.

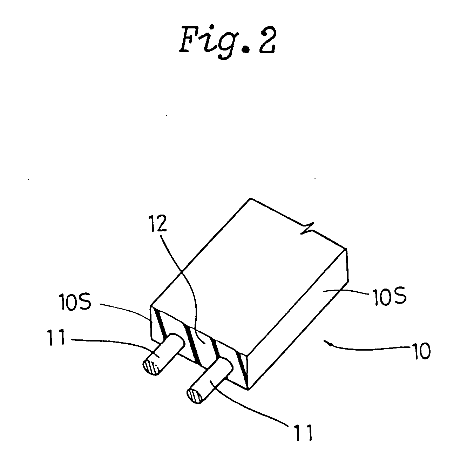

For example, each belt is formed by spirally winding a reinforcing strip 10 of rubber 12 in which one cord or a plurality of parallel cords 11 are embedded as shown in Fig.2. This rubber 12 forms the topping rubber for the belt cords.

The strip 10 is wound compactly, that is, contacting the side faces 10S with each other to keep the winding pitches constant. However, the pitches can be varied by providing variable spaces between the adjacent windings.

The maximum width WB of the wide belts in the tyre axial direction is set to be not less than 0.85 times the tread width WT.

If the width is less than 0.85 times WT, the rigidity of the tread edge portion or tread shoulder portion is insufficient and cornering performance is deteriorated.

The above-mentioned belt cord 11 is a hybrid cord made of a high modulus strand 13A and a low modulus strand 14A which are twisted together.

For the high modulus strand 13A, high modulus organic filaments 13 having an elastic modulus of not less than 1000 kgf/mm², more preferably not less than 1500 kgf/mm², for example, aromatic polyamide filaments, aromatic polyester filaments, polyvinylalcohol filaments having a strength of not less than 15 g/d, or the like are used.

For the low modulus strand 14A, low modulus organic filaments 14 having an elastic modulus of not more than 700 kgf/mm², preferably not more than 400 kgf/mm², for example, nylon filaments, polyester filaments, vinylon filaments or the like are used.

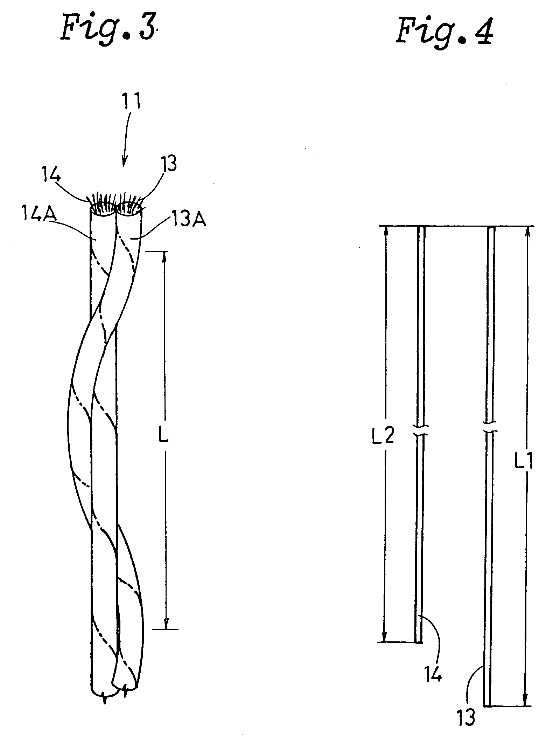

In this embodiment, each strand 13A, 14A is made of a plurality of filaments twisted together as shown in Fig.3.

However, each strand (13A and/or 14A) may be a single filament of the respective material.

In a unit length L of the belt cord 11, the length L1 of the high modulus filament 13 is 104 to 124 % of the length L2 of the low modulus filament 14, each measured along the filament under an unloaded state or unelongated state as shown in Fig.4.

Preferably, the length L1 is 109 to 119 % of the length L2.

In order to provide the above-mentioned different lengths L1 and L2 the cable twist number or multiplier of the low modulus strand 14A is differed from that of the high modulus strand 13A, while the strand-twist number or multiplier of the low modulus strand 14A is set to be equal to that of the high modulus strand 13A.

It is also possible, in the present invention, to differ the filament length L1 from the filament length L2 by
1) setting the cable twist number of the strand 13A equal to that of the strand 14A, and setting the strand twist number of the strand 13A more than that of the strand 14A, or
2) setting both the strand twist number and cable twist number of the strand 13A more than those of the strand 14A.

As the low modulus filaments 14 are shorter than the high modulus filaments 13, the belt cords are easily elongated until the high modulus filaments take up the load, and thereby tyre vulcanisation can be improved.

In the finished tyre, on the other hand, as the belt cords are in an elongated state they exhibit a high modulus, the tread portion has a tight hooping effect and a high resistance against any great deformation of the tread portion.

Therefore, steering stability and high speed durability are greatly improved with maintaining ride comfort.

If the filament length L1 is less than 104% of the length L2, the vulcanisation is not improved, and ride comfort and steering stability are impaired.

If the length L1 is more than 124% of the length L2, high speed durability decreases.

In the tests, the inventor also found that a belt made of spirally wound hybrid cords generally has a tendency to decrease the cornering power in comparison with the conventional belt structure.

In this embodiment, therefore, in order to avoid such a decrease and to obtain an improved cornering power, the quotient T/A (mm/degree) of the rubber thickness T (mm) of the rubber tread 17 measured at the tyre equator C from the tread surface to the outer surface of the radially outermost belt 7A divided by the hardness A (degree) of the tread rubber 17 is set to be not more than 0.19 mm/degree Shore A (0,20 mm/degree JIS A).

Further, the tyre 1 is provided with a single ply carcass made of cords having a cord modulus lower than that of a 1500d/2 polyester fibre cord, and the hardness of the bead apexes 9 is set to be not more than 99 degrees Shore A (96 degrees JIS A), and further the height (h) of the radially outer edges of the bead apexes 9 measured from the bead base line is set to be not more than 0.4 times the tyre section height H, because such an arrangement is effective in decreasing the tyre weight, improving fuel consumption performance, and balancing tyre rigidity of a tyre with a relatively low cornering power.

As explained above, in the tyre according to the present invention, as the organic fibre cord belt is used instead of steel belts, the tyre weight is greatly decreased.

Further, as the belt cord is a hybrid of the high modulus strand and low modulus strand the lengths of which are specifically defined, a proper elongation is obtained in the tyre vulcanising process, and thereby the vulcanisation can be improved.

Furthermore, as the bending rigidity of the belt is not excessively increased in contrast with the conventional steel belt, ride comfort and steering stability are obtained at the same time.

## Claims

1. A pneumatic tyre comprising a tread portion (2) having a pair of tread edges, a pair of axially spaced bead regions (4), a pair of sidewalls (3) extending between the tread edges and the bead regions (4), a bead core (5) disposed in each of the bead portions (4), a carcass (6) extending between the bead regions (4) and turned up around the bead cores (5), a rubber tread (17) disposed radially outside the crown portion of the carcass (6) defining the tread portion (2), and a belt (7) made of at least one belt cord (11) disposed between the carcass (6) and the rubber tread (2), wherein said belt cord (11) comprises a high modulus strand (13A) and a low modulus strand (14A) twisted together, said high modulus strand (13A) being made of two or more continuous organic material filament (13) having a high elastic modulus, said low modulus strand (14A) being made of two or more continuous organic material filaments (14) having a low elastic modulus, characterised in that the at least one belt cord (11) is wound spirally so that the windings of the belt cord (11) are laid at a substantially zero angle with respect to the tyre equator (C) and in a unit length of said belt cord, the length (L1) of the high modulus filament (13) being in the range of 104 to 124 % of the length (L2) of the low modulus filament (14), each measured along the respective filament in an unloaded state, the strand-twist number of the low modulus strand (14A) being equal to that of the high modulus strand (13A), and the cable twist number of the low modulus strand (14A) being differed from that of the high modulus strand (13A), the quotient T/A (mm/degree) of the rubber thickness T (mm) of the rubber tread (2) measured from the tread surface to the outer surface of the radially outermost belt (7A) divided by the hardness A (degree) of the tread rubber being not more than 0.19 mm/degree Shore A (0.2mm/degree JIS A), and each bead region (4) being provided with a rubber bead apex (9) having a hardness of not more than 99 degrees Shore A (96 degrees JIS A), said bead apex (9) extending radially outwardly from the bead core (5) so as to have a radially outer edge positioned at a height (h) of not more than 0.4 times the tyre section height (H), each measured from the bead base line.

2. A pneumatic tyre according to claim 1, characterised in that said length (L1) of the high modulus filament (13) is in the range of 109 to 119% of said length (L2) of the low modulus filament (14).

3. A pneumatic tyre according to either of claims 1 or 2, characterised in that the high modulus organic filament (13) has an elastic modulus of not less than 1000 kgf/mm², and the low modulus organic filament (14) has an elastic modulus of not more than 700 kgf/mm².

4. A pneumatic tyre according to any of claims 1 to 3, characterised in that said carcass (6) is composed of a single ply of cords having a cord modulus lower than that of a 1500d/2 polyester fibre cord.

## Patentansprüche

1. Ein Luftreifen mit einem Laufflächenteil (2), der ein paar Laufflächenränder aufweist, einem paar axial beabstandete Wulstbereiche (4), einem paar Seitenwände (3), die sich zwischen den Laufflächenrändern und den Wulstbereichen (4) erstrecken, einem Wulstkern (5), der in jedem der Wulstteile (4) angeordnet ist, einer Karkasse (6), die sich zwischen den Wulstbereichen (4) erstreckt und um die Wulstkerne (5) umgeschlagen ist, einer Gummilauffläche (17), die radial außerhalb des Kronenteils der Karkasse (6) angeordnet ist und den Laufflächenteil (2) definiert, und einem Gürtel (7), der aus wenigstens einem Gürtelcord (11) hergestellt ist, der zwischen der Karkasse (6) und der Gummilauffläche (2) angeordnet ist, wobei der Gürtelcord (11) einen Hochmodulfaden (13A) und einen Niedermodulfaden (14A) umfaßt, die miteinander verdreht sind, der Hochmodulfaden (13A) aus zwei oder mehr kontinuierlichen Filamenten (13) aus organischem Material mit einem hohen Elastizitätsmodul hergestellt ist, der Niedermodulfaden (14A) aus zwei oder mehr kontinuierlichen Filamenten (14) aus organischen Material mit einem niedrigen Elastizitätsmodul hergestellt ist,
dadurch gekennzeichnet,
daß der wenigstens eine Gürtelcord (11) spiralförmig gewickelt ist, so daß die Windungen des Gürtelcords (11) im wesentlichen unter einem Winkel von Null bezüglich des Reifenäquators (C) gelegt sind und in einer Einheitslänge des Gürtelcords, die Länge (L1) des Hochmodulfilaments (13) im Bereich von 104 bis 124 % der Länge (L2) des Niedermodulfilaments (14) liegt, jeweils gemessen entlang des jeweiligen Filaments in einem unbelasteten Zustand, die Fadenverdrehungsanzahl des Niedermodulfadens (14A) gleich jener des Hochmodulfadens (13A) ist, und die Kabelverdrehungsanzahl des Niedermodulfadens (14A) sich von jener des Hochmodulfadens (13A) unterscheidet, der Quotient T/A (mm/Grad) der Gummidicke T (mm) der Gummilauffläche (2), gemessen von der Laufflächenoberfläche zur äußeren Oberfläche des radial äußersten Gürtels (7A), dividiert durch die Härte A (Grad) des Laufflächengummis nicht mehr als 0.19 mm/Grad Shore A (0,2mm/Grad JIS A) beträgt, und jeder Wulstbereich (4) mit einem Gummiwulstkernreiter (9) versehen ist, der eine Härte von nicht mehr als 99 Grad Shore A (96 Grad JIS A) aufweist, der Wulstkernreiter (9) sich radial nach außen von dem Wulstkern (5) erstreckt, so daß er einen radial äußeren Rand aufweist, der bei einer Höhe (h) von nicht mehr als dem 0,4-fachen der Reifenschnitthöhe (H) positioniert ist, jeweils gemessen von der Wulstbasislinie.

2. Ein Luftreifen nach Anspruch 1,
dadurch gekennzeichnet, daß die Länge (L1) des Hochmodulfilaments (13) im Bereich von 109 bis 119 % der Länge (L2) des Niedermodulfilaments (14) liegt.

3. Ein Luftreifen nach Anspruch 1 oder 2,
dadurch gekennzeichnet, daß das organische Hochmodulfilament (13) einen Elastizitätsmodul von nicht weniger als 1000 kgf/mm aufweist, und daß das organische Niedermodulfilament (14) einen Elastizitätsmodul von nicht mehr als 700 kgf/mm aufweist.

4. Ein Luftreifen nach einem der Ansprüche 1 bis 3 ,
dadurch gekennzeichnet, daß die Karkasse (6) aus einer Einzellage von Corden zusammengesetzt ist, die einen Cordmodul aufweisen, der geringer ist als der eines 1500d/2 Polyesterfasercords.

## Revendications

1. Pneumatique comprenant une partie (2) de bande de roulement ayant deux bords de bande de roulement, une paire de régions de talon (4) qui sont axialement espacées, une paire de flancs (3) qui sont disposés entre les bords de la bande de roulement et les régions de talon (4), une tringle (5) placée dans chacune des parties de talon (4), une carcasse (6) placée entre les régions de talon (4) et repliée autour des tringles (5), une bande de roulement (17) de caoutchouc placée radialement à l'extérieur de la partie centrale de la carcasse (6) et délimitant la partie (2) de bande de roulement, et une ceinture (7) formée d'au moins un câblé (11) de ceinture placée entre la carcasse (6) et la bande de roulement (2) de caoutchouc, dans lequel le câblé de ceinture (11) comprend un brin (13A) de module élevé et un brin (14A) de faible module qui sont retordus mutuellement, le brin de module élevé (13A) étant formé d'au moins deux filaments continus (13) d'une matière organique ayant un module élevé d'élasticité, le brin de faible module (14A) étant formé d'au moins deux filaments continus (14) d'une matière organique ayant un faible module d'élasticité, le pneumatique étant caractérisé en ce qu'un câblé de ceinture au moins (11) est enroulé en spirale afin que les enroulements du câblé de ceinture (11) forment un angle pratiquement nul avec l'équateur du pneumatique (C) et, sur une longueur unitaire du câblé de ceinture, la longueur (L1) du filament de module élevé (13) est comprise entre 104 et 124 % de la longueur (L2) du filament de faible module (14), ces longueurs étant mesurées chacune le long du filament respectif à l'état sans charge, le nombre de torsions de brin du brin de faible module (14A) étant égal à celui du brin de module élevé (13A), et le nombre de torsions de câblé du brin de faible module (14A) étant différent de celui du brin de module élevé (13A), le quotient T/A (mm/degré) de l'épaisseur T du caoutchouc (mm) de la bande de roulement (2) de caoutchouc, mesurée depuis la surface de la bande de roulement vers la surface externe de la ceinture radialement la plus à l'extérieur (7A), par la dureté A (degré) du caoutchouc de la bande de roulement ne dépasse pas 0,19 mm/degré Shore A (0,2 mm/degré JIS A), et chaque région (4) de talon possède une pointe de bourrage de talon (9) formée de caoutchouc ayant une dureté qui ne dépasse pas 99 degrés Shore A (96 degrés JIS A), la pointe de bourrage de talon (9) étant disposée radialement vers l'extérieur de la tringle (5) afin qu'elle ait un bord radialement externe placé à une hauteur (h) qui ne dépasse pas 0,4 fois la hauteur (H) en coupe du pneumatique, chaque hauteur étant mesurée par rapport à l'axe de base des talons.

2. Pneumatique selon la revendication 1, caractérisé en ce que la longueur (L1) du filament (13) de module élevé est comprise entre 109 et 119 % de la longueur (L2) du filament de faible module (14).

3. Pneumatique selon la revendication 1 ou 2, caractérisé en ce que le filament organique (13) de module élevé a un module d'élasticité qui n'est pas inférieur à 1.10¹⁰ Pa (1 000 kgf/mm²), et le filament organique de faible module (14) a un module d'élasticité qui ne dépasse pas 7.10⁹ Pa (700 kgf/mm).

4. Pneumatique selon l'une quelconque des revendications 1 à 3, caractérisé en ce que la carcasse (6) est composée d'une seule nappe de câblés ayant un module de câblé inférieur à celui d'un câblé de fibres de polyester 1500d/2.
